Europäisches Patentamt

European Patent Office

Office européen des brevets

(19)

(11) Publication number: **0 392 016**
A1

# (12) EUROPEAN PATENT APPLICATION
## published in accordance with Art. 158(3) EPC

(21) Application number: 89904610.6

(22) Date of filing: 17.04.89

(86) International application number:
PCT/JP89/00413

(87) International publication number:
WO 89/10063 (02.11.89 89/26)

(51) Int. Cl.⁵: A23B 7/156

(30) Priority: 18.04.88 JP 94966/88

(43) Date of publication of application:
17.10.90 Bulletin 90/42

(84) Designated Contracting States:
FR IT

(71) Applicant: UMEMURA, Kozo
43-15, Izumicho 2-chome Suita-shi
Osaka 564(JP)

(72) Inventor: UMEMURA, Kozo
43-15, Izumicho 2-chome Suita-shi
Osaka 564(JP)

(74) Representative: Noz, Franciscus Xaverius, Ir.
et al
Algemeen Octrooibureau P.O. Box 645
NL-5600 AP Eindhoven(NL)

(54) KEEPABLE TRUFFLES AND METHOD OF PRODUCING SAME.

(57) Keepable truffles obtained by removing the mud and dirt from the collected truffles, immersing these truffles in a fresh and raw state in sunflower oil and preserving the resultant truffles in a container; and a method of producing the same. The fragrance and taste of these keepable truffles are not lost for a long period of time, and, when the truffles are used out of season, dishes the taste of which is identical with that of dishes using raw, just-collected truffles can be prepared.

EP 0 392 016 A1

# PRESERVED TRUFFLE AND ITS MANUFACTURING METHOD

## Technical Field

This invention relates to preserved truffle ready to be used at any time and the method of manufacturing same by immersing fresh picked truffle in edible vegetable oil so as to preserve it without damaging its original taste and flavor.

## Background Art

Heretofore, there have been several generally known methods for preserving edible mushrooms, such as drying, salting, canning. A still another known method is to compound mushrooms in paste state with edible fat or oil as described in the Japanese Patent Laid-Open Gazette No. Sho 61 - 285960. According to the generally known methods as above mentioned, it was considered unavoidable that the mushrooms processed under such methods would have different taste and flavor at the time of use from those in a fresh state and, therefore, when cooked, the former would become less savory in both taste and flavor than the latter, namely, raw and fresh mushrooms. As for the other method in which mushrooms in pasty form are used, such processed mushrooms have the drawback in that they are not suitable for use where mushrooms need to be cooked in their original shape.

In view of the fact that truffle collecting is limited to a period from November till February and that truffle is highly valued for its taste and flavor specially as cooked and prepared from its fresh and raw state, there has been a need for developing a perfect preservation method which would overcome the abovementioned drawbacks.

Disclosure of the Invention

It is the object of the present invention to provide preserved truffle which was prepared by immersing collected raw truffle in edible vegetable oil such as sunflower oil and the method of manufacturing such truffle, and wherein the aforementioned drawbacks are overcome.

Truffle preserved by the invented method retains the same taste and flavor as those of fresh collected one after a considerable period of preservation time. Also, the oil in which truffle was immersed could be used as sauce for truffle dishes. According to the present invention, if collected truffle is immersed in edible vegetable oil such as sunflower oil in the raw and in the original shape, the truffle thus processed would retain not only its original taste and flavor but also its original shape, making it suitable for certain dishes where truffle in the original shape has to be used.

Best Mode for Carrying Out the Invention

Fresh and raw truffle collected during the period from November till February is brushed to remove any mud and dirt off, put in a glass jar filled with sunflower oil as it is, namely, in the raw and in the original shape, and immersed in the oil, wherepon the jar is sealed up tightly and placed in storage under three different conditions, namely, at the normal temperature, in the refrigerated condition and in the frozen condition. The jar stored at the normal temperature was unsealed after a period of a little over one month, and the one kept in refrigerated storage was unsealed after a period of several months, and the one kept in frozen storage was unsealed after a period of one year. In each of these cases, when the truffle was cooked, it produced almost the same taste and flavor as those obtained by cooking fresh and raw truffle. Further, when the sauce prepared from the sunflower oil in which the truffle had been immersed was used on the cooked truffle, it could improve the taste and flavor of the dish even more. Also, it was possible to use this oil on various other dishes in order to improve their flavors. Furthermore, in carrying out the present invention, there are cases where olive oil or other edible vegetable oils as appropriate is used for truffle immersion.

Industrial Applicability

The preserved truffle provided by the present invention wherein, as described above, fresh picked truffle is immersed in the raw in edible vegetable oil such as sunflower oil will find particular application in preparation of truffle dishes with almost the same taste and flavor as in the case of fresh and raw truffle at any time off the collecting season or at any remote place, making its use most suitable in the age of genuine gourmet which is gaining great popularity in many parts of the world in recent years. Such preserved truffle is extremely useful and serviceable in that it can be used not only in food catering business such as restaurants but also in home cooking.

## Claims

1. Preserved truffle which is prepared by immersing collected raw truffle in edible vegetable oil such as sunflower oil.

2. A method of manufacturing the preserved truffle, characterized in that collected raw truffle is immersed in the raw state in its original shape in edible vegetable oil such as sunflower oil.

# INTERNATIONAL SEARCH REPORT

International Application No  PCT/JP 89/00413

## I. CLASSIFICATION OF SUBJECT MATTER (if several classification symbols apply, indicate all) 6

According to International Patent Classification (IPC) or to both National Classification and IPC

Int. Cl$^4$    A23B7/156

## II. FIELDS SEARCHED

### Minimum Documentation Searched 7

| Classification System | Classification Symbols |
|---|---|
| IPC | A23B7/156-7/16<br>A23L1/212, 3/00, 3/34 |

### Documentation Searched other than Minimum Documentation to the Extent that such Documents are included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 54-105261 (Milerb A.G.)<br>18 August 1979 (18. 08. 79)<br>& BE, A, 873360 & DE, A, 2900098<br>& GB, A, 2011775 & NL, A, 7900054<br>& SE, A, 7900097 & BR, A, 7900061<br>& FR, A, 2413888 & AT, A, 7809375<br>& GB, B, 2011775 & CH, A, 633419<br>& IT, B, 1111753 | 1-2 |
| A | GB, A, 1457783 (Clorox Co.)<br>8 December 1976 (08. 12. 76)<br>& BE, A, 814539 & NL, A, 7405971<br>& DE, A, 2421592 & FR, A, 2227833<br>& CA, A, 1018819 & CH, A, 596773<br>& IT, B, 1035076 | 1-2 |
| A | JP, A, 60-37930 (Q.P. Corp.)<br>27 February 1985 (27. 02. 85)<br>& JP, B, 62-11573 | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 30, 1989 (03. 06. 89) | July 17, 1989 (17. 07. 89) |

| International Searching Authority | Signature of Authorized Officer |
|---|---|
| Japanese Patent Office | |

Form PCT/ISA/210 (second sheet) (January 1985)